(19) **Europäisches Patentamt**
**European Patent Office**
**Office européen des brevets**

(11) **EP 3 446 852 B1**

(12) **FASCICULE DE BREVET EUROPEEN**

(45) Date de publication et mention de la délivrance du brevet:
**29.04.2020 Bulletin 2020/18**

(21) Numéro de dépôt: **18306098.7**

(22) Date de dépôt: **10.08.2018**

(51) Int Cl.:
*B29C 49/64* (2006.01)    *B29C 49/06* (2006.01)
*B29C 49/36* (2006.01)    *B29C 49/68* (2006.01)
*B29K 67/00* (2006.01)    *B29K 105/00* (2006.01)
*B29L 31/00* (2006.01)

(54) **INSTALLATION ET PROCEDE DE PRODUCTION DE RECIPIENTS, PERMETTANT DE PRODUIRE DES LE DEMARRAGE**

**HERSTELLUNGSANLAGE UND -VERFAHREN VON BEHÄLTERN, DIE AB DER EINSCHALTUNG PRODUZIEREN KÖNNEN**

**INSTALLATION AND METHOD FOR PRODUCING CONTAINERS, ALLOWING PRODUCTION FROM THE START**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.08.2017 FR 1757857**

(43) Date de publication de la demande:
**27.02.2019 Bulletin 2019/09**

(73) Titulaire: **Sidel Participations**
**76930 Octeville-sur-Mer (FR)**

(72) Inventeurs:
• **PASQUIER, Hervé**
**76930 Octeville-sur-mer (FR)**
• **LAHOGUE, Yoann**
**76930 Octeville-sur-mer (FR)**
• **SOUFFES, Denis**
**76930 Octeville-sur-mer (FR)**
• **FEUILLOLEY, Guy**
**76930 Octeville-sur-mer (FR)**

(74) Mandataire: **Grassin d'Alphonse, Emmanuel Jean Marie**
**Sidel Participations**
**Avenue de la Patrouille de France**
**76930 Octeville-sur-mer (FR)**

(56) Documents cités:
**US-A1- 2008 099 961    US-A1- 2012 080 827**
**US-A1- 2014 145 375    US-A1- 2017 136 682**
**US-B2- 8 921 808**

## Description

L'invention a trait à la production des récipients à partir d'ébauches en matière plastique (notamment en PET).

Le terme « ébauche » désigne :

- une préforme, c'est-à-dire une pièce brute d'injection pourvue d'un corps cylindrique qui se prolonge, à une extrémité inférieure, par un fond fermé et, à une extrémité supérieure, par un col dont la forme est définitive, ou
- un récipient intermédiaire, issu d'opérations (par ex. un préformage) conduites sur une préforme, et destiné à en subir de nouvelles pour former *in fine* un récipient.

La production des récipients comprend ordinairement :

- une première phase de conditionnement thermique (également appelée chauffe) des ébauches, conduite au sein d'une unité de chauffe (également appelée four) définissant une cavité de chauffe, cette première phase consistant à faire défiler les préformes dans la cavité pour les amener à une température supérieure à la température de transition vitreuse de la matière (laquelle est, pour le PET, d'environ 80°C) ;
- une deuxième phase de formage des récipients à partir des préformes, conduite au sein d'une unité de formage équipée de moules à l'empreinte du modèle de récipient à former, cette deuxième phase consistant à introduire chaque préforme chaude dans un moule et à lui injecter un fluide (notamment un gaz, typiquement de l'air) sous pression pour la plaquer contre le moule et lui conférer ainsi l'empreinte du modèle de récipient.

Les fours classiques sont équipés de lampes à incandescence de type halogène, qui rayonnent suivant la loi de Planck sur un spectre continu.

Avant de lancer toute production, il convient de préchauffer le four pour l'amener, à l'aide des lampes, à une température convenable susceptible de conférer aux ébauches un profil thermique permettant de mener ensuite à bien le formage.

Ce préchauffage est lent et nécessite des réglages délicats.

Une technologie de chauffe alternative a cependant vu le jour récemment, fondée sur l'utilisation d'émetteurs équipés de sources de rayonnement électromagnétique monochromatique (notamment des lasers), dont le spectre d'émission s'étend pour l'essentiel dans le domaine de l'infrarouge. Un four fonctionnant à l'aide de cette technologie, illustrée par la demande de brevet européen EP3119582 (Sidel Participations), présente de nombreux avantages par rapport à un four classique à lampes halogènes. Entre autres, dans ce type de four :

- les émetteurs rayonnent dans l'infrarouge sans diffusion de chaleur, ce qui, à la différence d'un four halogène, rend inutile toute ventilation ;
- les préformes peuvent être chauffées selon des profils thermiques plus précis ;
- aucune préchauffe n'est nécessaire.

Ce dernier avantage est déterminant en termes de productivité : il rend en théorie possible le démarrage d'une production sans préchauffage, et donc sans délai ; il suffirait en effet de mettre en route l'unité de formage, d'allumer le four (c'est-à-dire d'alimenter en courant les émetteurs) et d'initier le défilement des ébauches.

Ce n'est pas si simple en réalité. Une unité de formage est une machine lourde, à forte inertie, qui suit, au démarrage, une phase d'accélération assez longue. Pendant cette phase de démarrage, la vitesse moyenne à laquelle les ébauches défilent dans le four est inférieure à la vitesse nominale (atteinte à pleine cadence). Démarrer la production sans attendre que la pleine cadence soit atteinte augmente le temps d'exposition des ébauches au rayonnement des émetteurs.

Mais ce temps d'exposition détermine la température finale à laquelle les ébauches sortent du four. Or la qualité d'un récipient dépend en grande partie du profil thermique acquis par l'ébauche dans le four. Une ébauche trop chaude, en particulier, conduit à un récipient mal formé.

Face à cette difficulté, la demande de brevet américain US2012/0080827 (Krones), dans lequel le four est rotatif et comprend des postes individuels de chauffe, propose une solution consistant soit à faire varier soit l'angle à partir duquel la chauffe débute, soit la puissance de chauffe (cf. [0054]).

Cependant, outre que la chauffe des ébauches dans des postes individuels de chauffe est très différente de la chauffe au défilé, ce brevet est muet sur la manière dont il convient d'implémenter les variations d'angle ou de puissance de chauffe.

L'invention vise à apporter une véritable solution pratique au problème exposé ci-dessus, en proposant un procédé et une installation permettant de démarrer la production des récipients, d'une part, sans attendre que l'unité de formage ait atteint sa pleine cadence, et, d'autre part, en maintenant la qualité des récipients produits pendant la phase de démarrage à cadence réduite.

A cet effet, il est proposé, en premier lieu, une installation de production de récipients à partir d'ébauches en matière plastique, qui définit un trajet de circulation des ébauches et des récipients, et qui comprend :

- une unité de formage équipée d'un carrousel tournant entraîné par un moteur et d'une série de postes de formage montés sur le carrousel et incluant chacun un moule à l'empreinte d'un récipient et un dispositif d'injection d'un fluide sous pression dans les ébauches;
- une unité de chauffe des ébauches, située sur le trajet de circulation en amont de l'unité de formage et définissant une cavité de chauffe, cette unité de chauffe étant équipée :

⚬ d'une série d'émetteurs adjacents bordant la cavité et comprenant chacun une pluralité de sources de rayonnement monochromatique émettant dans l'infrarouge,
⚬ d'un système d'entraînement des ébauches, synchronisé au carrousel et comprenant une pluralité de supports individuels pour les ébauches ;
⚬ d'une alimentation électrique fournissant chaque émetteur en puissance électrique ;

- une unité de contrôle reliée au moteur de l'unité de formage et à l'alimentation de l'unité de chauffe, cette unité de contrôle ayant une mémoire dans laquelle sont enregistrées une consigne de vitesse $\omega_N$ nominale de rotation du carrousel et une consigne de puissance électrique nominale $P_N$ qui correspondent à une cadence de production nominale, cette unité de contrôle étant programmée pour, à partir d'une configuration arrêtée dans laquelle le carrousel est immobile :
- commander la rotation du carrousel suivant la consigne de vitesse $\omega_N$ nominale,
- au cours de l'accélération du carrousel :

⚬ prendre en compte une vitesse $\omega(t)$ instantanée réelle de rotation du carrousel,
⚬ régler la puissance électrique de l'alimentation à une valeur P(t) instantanée telle que :

$$P(t) = P_N \cdot \frac{\omega(t-T)}{\omega_N}$$

où $T$ est un nombre réel positif ou nul.

Selon un mode particulier de réalisation, cette installation comprend un dispositif d'alimentation de l'unité de chauffe en ébauches, propre à adopter un état ouvert dans lequel le passage des ébauches vers l'unité de chauffe est libre, et un état fermé dans lequel le passage des ébauches vers l'unité de chauffe est bloqué, et l'unité de contrôle est programmée pour :

- tant que la vitesse réelle de rotation du carrousel est inférieure à une valeur seuil comprise entre 15% et 50% de la consigne, maintenir fermé le dispositif d'alimentation ;
- dès que la vitesse de rotation du carrousel atteint la valeur seuil, commander l'ouverture du dispositif d'alimentation.

Il est proposé, en deuxième lieu, un procédé de production de récipients à partir d'ébauches en matière plastique, au sein d'une installation telle que présentée ci-dessus, qui comprend les opérations suivantes, à partir d'une configuration arrêtée de l'installation, dans laquelle le carrousel est immobile :

- commander par l'unité de contrôle la rotation du carrousel suivant la consigne de vitesse $\omega_N$ nominale,
- au cours de l'accélération du carrousel :

⚬ mesurer une vitesse $\omega(t)$ instantanée réelle de rotation du carrousel,
⚬ sur commande de l'unité de contrôle, régler la puissance électrique de l'alimentation à une valeur $P(t)$ instantanée telle que :

$$P(t) = P_N \cdot \frac{\omega(t-T)}{\omega_N}$$

D'autres objets et avantages de l'invention apparaîtront à la lumière de la description d'un mode de réalisation, faite ci-après en référence aux dessins annexés dans lesquels :

- la **FIG.1** est une vue en perspective schématique d'une installation de production de récipient à partir d'ébauches en matière plastique ;
- la **FIG.2** est un diagramme sur lequel sont tracés, en haut, une courbe illustrant la montée en vitesse du carrousel au démarrage de la production ; au milieu, une courbe illustrant la montée en puissance de l'unité de chauffe ; en bas, un chronogramme illustrant la commande d'ouverture du dispositif d'alimentation ;
- la **FIG.3** est une vue en perspective partielle, suivant une autre orientation, de l'installation de la **FIG.1**, avec, en médaillon, un détail à plus grande échelle centré sur le dispositif d'alimentation placé dans un état fermé ;
- la **FIG.4** est une vue similaire à la **FIG.3**, illustrant l'ouverture du dispositif d'alimentation ;
- la **FIG.5** est une vue similaire à la **FIG.3**, illustrant le fonctionnement de l'installation production en régime permanent.

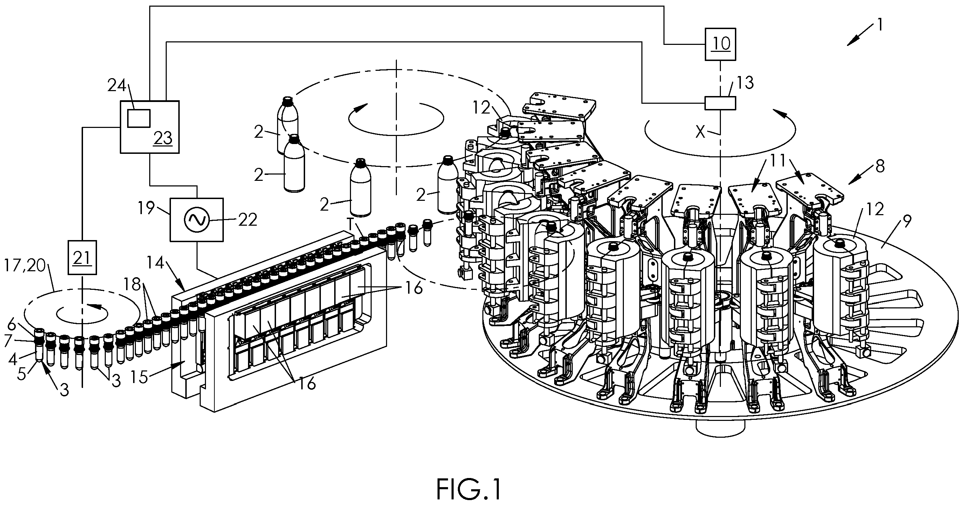

Sur la **FIG.1** est représentée une installation **1** de production de récipients **2** à partir d'ébauches **3** en matière plastique.
Dans le mode de réalisation illustré, les ébauches **3** sont des préformes brutes d'injection, qui comprennent chacune un corps **4**, un fond **5** qui ferme le corps **4** à une extrémité inférieure, et un col **6** ouvert (dont la forme est définitive) qui prolonge le corps **4** à une extrémité supérieure. Le corps **4** et le col **6** sont séparés par une collerette **7** par laquelle l'ébauche **3** et le récipient **2** qui en est issu peuvent être suspendus, comme il apparaîtra ci-après.
En variante, les ébauches **3** pourraient être des récipients intermédiaires obtenus à partir de préformes (par ex. à la suite d'un présoufflage) mais dont la forme n'est pas définitive et qui sont destinés à subir des opérations de finition (par ex. un soufflage).

Dans la description qui suit, les ébauches **3** sont arbitrairement des préformes, mais ce mode de réalisation n'est pas restrictif.

L'installation **1** définit un trajet **T** de circulation des préformes **3** et des récipients **2**. Ce trajet **T** suit des éléments de trajectoire définis par les différents composants de l'installation **1**. Les termes « amont » et « aval » sont définis par référence au sens de déplacement des préformes **3**.

L'installation **1** comprend, en premier lieu, une unité **8** de formage équipée d'un carrousel **9** tournant entraîné en rotation autour d'un axe **X** par un moteur **10**, et d'une série de postes **11** de formage montés sur le carrousel **9**. A des fins de clarté, une partie seulement des postes 11 de formage est représentée sur la **FIG.1**.

Chaque poste **11** de formage inclut un moule **12** à l'empreinte d'un modèle de récipient et un dispositif d'injection d'un fluide (typiquement de l'air) sous pression dans les préformes **3** préalablement chauffées.

Selon un mode de réalisation illustré sur les dessins, chaque moule **12** est du type portefeuille, et comprend une paire de demi-moules articulés autour d'une charnière commune entre :

- une position ouverte (au centre sur la **FIG.1**) dans laquelle les demi-moules sont écartés pour permettre l'évacuation d'un récipient **2** formé puis l'introduction d'une nouvelle préforme **3** préalablement chauffée, et
- une position fermée (à droite sur la **FIG.1**) dans laquelle les demi-moules sont jointifs pour former ensemble l'empreinte du modèle de récipient à former.

Le moteur **10** qui anime le carrousel **9** est par ex. un moteur-couple, c'est-à-dire un servomoteur sans balais à aimants permanents (encore appelé moteur synchrone à aimants permanents, ou encore moteur sans balais à courant continu), du type comprenant un rotor solidaire du carrousel et un stator fixe périphérique.

L'unité **8** de formage est en outre équipée d'un codeur **13**, monté sur l'axe **X**, qui fournit une information angulaire dont peut être déduite une vitesse instantanée, notée $\omega(t)$, de rotation du carrousel **9**.

A pleine cadence de production (stabilisée), le carrousel **9** tourne à une vitesse de rotation, dite nominale (également stabilisée), notée $\omega_N$.

L'installation **1** comprend, en deuxième lieu, une unité **14** de chauffe des préformes **3**, située sur le trajet **T** de circulation en amont de l'unité **8** de formage.

Cette unité **14** de chauffe, également dénommée « four », définit une cavité **15** de chauffe dans laquelle défilent les préformes **3**. Le four **14** est équipé :

  ○ d'une série (et par ex. de deux rangées en regard) d'émetteurs **16** adjacents bordant la cavité **15** et comprenant chacun une pluralité de sources de rayonnement électromagnétique,

  ○ d'un système **17** d'entraînement des préformes **3**, synchronisé au carrousel **9** et comprenant une pluralité de supports **18** individuels pour les préformes **3** ;

  ○ d'une alimentation **19** électrique fournissant les émetteurs **16** en puissance électrique.

Selon un mode de réalisation, le système **17** d'entraînement se présente sous forme d'une chaîne pourvue de maillons portant chacun un support **18** (appelé tournette) auquel est suspendue une préforme **3**. Cette chaîne **17** circule sur des roues **20** dont l'une au moins est entraînée soit par un moteur **21** (comme illustré sur la **FIG.1**), qui est dans ce cas synchronisé avec le carrousel **9**, soit par le carrousel 9 lui-même, auquel la roue **20** est alors reliée par ex. par une courroie.

Les sources de chaque émetteur **16** sont choisies pour émettre un rayonnement monochromatique, dans le domaine de l'infrarouge.

En théorie, une source monochromatique est une source idéale émettant une onde sinusoïdale de fréquence unique. En d'autres termes, son spectre en fréquence est constitué d'une seule raie de largeur spectrale nulle (Dirac).

Dans la pratique, une telle source n'existe pas, une source réelle ayant un spectre d'émission en fréquence qui s'étend sur une bande de largeur spectrale faible mais non nulle, centrée sur une fréquence principale où l'intensité du rayonnement est maximale. Pour les besoins de la présente demande, on considère comme monochromatique une telle source réelle. De même, pour les besoins de la présente description, on considère comme monochromatique une source multimode, c'est-à-dire émettant sur un spectre discret comprenant plusieurs bandes étroites centrées sur des fréquences principales distinctes.

L'avantage d'un rayonnement monochromatique est que, bien choisi, il peut être concentré sur une (ou plusieurs) fréquence(s) pour laquelle (ou pour lesquelles) le comportement thermique du matériau des préformes 3 est, en termes d'absorption, particulièrement intéressant.

A titre d'exemple, pour obtenir une chauffe rapide en surface des préformes 3, on peut choisir une (ou plusieurs) fréquence(s) dans l'infrarouge pour laquelle (pour lesquelles) le matériau est très absorbant. A contrario, pour obtenir une chauffe plus lente mais plus homogène dans l'épaisseur des préformes **3**, on peut choisir une (ou plusieurs) fréquence(s) pour laquelle (pour lesquelles) le matériau est relativement moins absorbant.

En pratique, les sources dont sont pourvus les émetteurs **16** sont des lasers (par exemple des diodes laser) émettant dans l'infrarouge et organisés par juxtaposition et superposition pour former une ou plusieurs matrices.

En l'espèce, chaque matrice peut être une matrice de diodes laser à cavité verticale émettant par la surface (VCSEL), chaque diode émettant par exemple un faisceau laser d'une puissance unitaire de l'ordre du Watt à une longueur d'onde d'environ 1 μm.

Ces sources sont radiantes, c'est-à-dire que le rayonnement émis est transmis aux préformes **3** sans que l'air serve de vecteur de transmission.

Les sources convertissent la puissance électrique qui leur est fournie en un champ électromagnétique rayonné dans la cavité.

Cette puissance peut être variable. Ainsi, comme illustré sur la **FIG.1**, le four **14** comprend avantageusement, pour (ou dans) l'alimentation **19** électrique, un variateur **22** de puissance. Ce variateur **22** peut être analogique ou électronique.

En faisant l'hypothèse que les émetteurs **16** offrent un rendement, (noté $R$) qui peut être considéré comme sensiblement constant, la puissance instantanée (notée $P_C(t)$) du champ électromagnétique rayonné par les émetteurs **16** est liée par une relation de proportionnalité à la puissance électrique (notée P(t)) qui leur est fournie :

$$P_C(t) = R \cdot P(t)$$

La puissance électrique fournie aux émetteurs **16** présente une valeur nominale $P_N$ non nulle, correspondant à la puissance requise en pleine cadence de production, et une valeur minimale $P_0$ qui peut être nulle.

A la puissance nominale $P_N$ fournie correspond une puissance $P_{CN}$ électromagnétique nominale rayonnée par les émetteurs **16** :

$$P_{CN} = R \cdot P_N$$

La puissance $P_{CN}$ électromagnétique nominale est la puissance qui, en régime stationnaire (c'est-à-dire à pleine cadence de production) doit être rayonnée par les émetteurs **16** pour garantir qu'à la sortie de la cavité **15** chaque préforme **3** présente un profil de température acceptable permettant de former un récipient **2** de qualité acceptable.

De même, à la puissance minimale $P_0$ fournie correspond une puissance électromagnétique minimale notée $P_{C0}$ rayonnée par les émetteurs **16** :

$$P_{C0} = R \cdot P_0$$

Dès lors que la puissance P(t) électrique fournie (et donc la puissance $P_C(t)$ électromagnétique) est non nulle, les émetteurs **16** sont dans un état dit « allumé », c'est-à-dire que les sources émettent un rayonnement dans la cavité **15**.

A contrario, $P_{C0}$ est nulle si $P_0$ est nulle. Dans ce cas, les émetteurs **16** sont dans un état dit « éteint », c'est-à-dire que ses sources n'émettent aucun rayonnement dans la cavité **15**.

Le variateur **22** permet de régler la puissance P(t) électrique instantanée fournie à une fraction de la puissance $P_N$ électrique nominale :

$$P(t) = K \cdot P_N$$

où $K$ est un coefficient de proportionnalité, nombre réel positif ou nul (correspondant à l'extinction dans ce dernier cas), associé aux émetteurs **16**.

L'installation **1** comprend, en troisième lieu, une unité **23** de contrôle (électronique et/ou informatique) reliée à l'unité **8** de formage et au four **14**, dont elle commande, respectivement, la vitesse de rotation du carrousel **9** et la puissance électrique fournie aux émetteurs **16**.

Plus précisément, l'unité **23** de contrôle est reliée au moteur **10** de l'unité **8** de formage et lui délivre une puissance électrique dont est proportionnelle la vitesse de rotation du carrousel **9** (lequel est cependant affecté d'un temps de réponse en raison de son inertie).

L'unité **23** de contrôle est par ailleurs reliée à l'alimentation **19** électrique du four **14**, dont elle commande le variateur **22** pour moduler la puissance électrique fournie aux émetteurs **16**.

Selon un mode de réalisation illustré sur la **FIG. 1**, l'unité **23** de contrôle est reliée au moteur **21** du système **17** d'entraînement du four **14**, auquel il délivre une puissance électrique.

L'unité **23** de contrôle possède une mémoire **24** dans laquelle sont enregistrées :

- pour le carrousel **9**, une consigne de vitesse correspondant à la vitesse $\omega_N$ nominale de rotation du carrousel **9**, et
- pour le four **14**, une consigne de puissance correspondant à la puissance électrique nominale $P_N$.

L'unité **23** de contrôle est programmée pour, à partir d'une configuration arrêtée dans laquelle le carrousel **9** est immobile :

- commander la rotation du carrousel **9** suivant la consigne de vitesse $\omega_N$ nominale,
- au cours de l'accélération du carrousel **9** :

  ∘ prendre en compte une vitesse $\omega(t)$ instantanée réelle de rotation du carrousel **9**,
  ∘ sur commande de l'unité **23** de contrôle, régler la puissance électrique de l'alimentation **19** à une valeur P(t) instantanée telle que :

$$P(t) = P_N \cdot \frac{\omega(t-T)}{\omega_N}$$

où *T*, un nombre réel positif ou nul, correspond à un éventuel délai entre la puissance *P*(*t*) et la vitesse *ω*(*t*) de rotation du carrousel **9**.

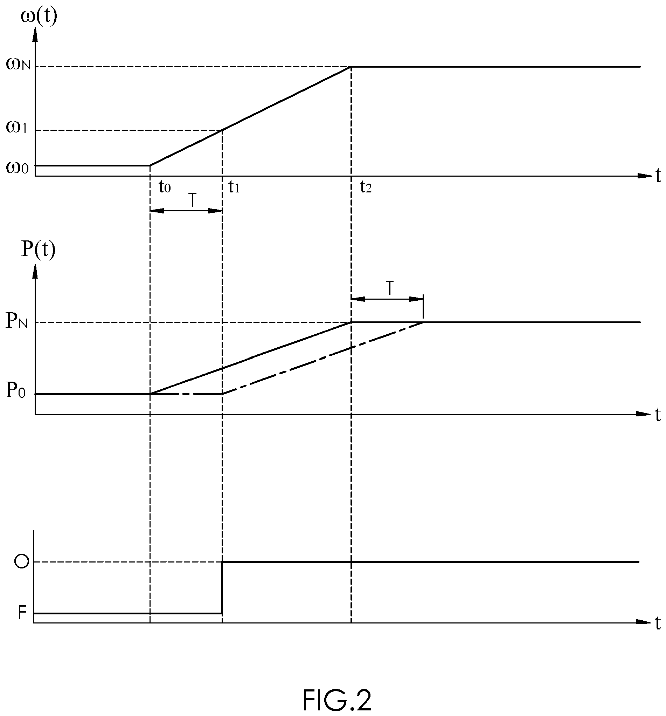

Comme nous l'avons évoqué, le carrousel **9** présente une inertie telle que sa vitesse *ω*(*t*) instantanée réelle (mesurée par le codeur **13**, qui transmet la mesure à l'unité **23** de contrôle), à partir d'une valeur initiale *ω*_0 (valeur de la vitesse *ω*(*t*) à un instant *t*_0 initial), n'atteint pas immédiatement la consigne *ω*_N, mais subit une accélération, comme illustré par la courbe du haut sur la **FIG.2**. Dans l'exemple illustré, l'accélération est linéaire, ce qui ne correspond pas nécessairement à la réalité mais suffit à illustrer le phénomène.

Plutôt que d'attendre, pour lancer la production, que la vitesse *ω*(*t*) instantanée de rotation du carrousel **9** n'ait atteint la consigne *ω*_N (à un instant *t*_2), il est proposé d'allumer les émetteurs **16** et de lancer la production sans délai (*T* = 0, courbe en trait plein au centre de la **FIG.2**), ou à faible délai (*T* > 0, courbe en trait mixte sur la **FIG.2**), tout en adaptant la puissance électrique instantanée *P*(*t*) à la vitesse *ω*(*t*) instantanée du carrousel **9**.

En effet, on peut constater que la quantité d'énergie reçue par les préformes **3** est directement proportionnelle à leur temps d'exposition dans la cavité **15** et à la puissance électrique fournie aux émetteurs **16**.

Cette relation est due à l'absence d'inertie thermique des émetteurs **16**, qui rayonnent instantanément la puissance électromagnétique *P*_C (*t*), issue de la puissance *P*(*t*) électrique fournie, en proportion de leur rendement, selon la relation déjà citée :

$$P_C (t) = R \cdot P(t)$$

Comme les émetteurs **16** sont dépourvus d'inertie thermique, on peut par conséquent asservir la puissance *P*(*t*) électrique instantanée fournie à la vitesse *ω*(*t*) réelle instantanée de rotation du carrousel **9**.

Plus précisément, le même facteur de proportion relie la puissance *P*(*t*) électrique instantanée à la puissance *P*_N nominale d'une part, et la vitesse *ω*(*t*) réelle instantanée à la vitesse *ω*_N nominale d'autre part :

$$\frac{P(t)}{P_N} = \frac{\omega(t)}{\omega_N}$$

C'est pourquoi l'unité **23** de contrôle commande une augmentation progressive de la puissance *P*(*t*) électrique instantanée fournie aux émetteurs **16** en proportion de la vitesse *ω*(*t*) réelle instantanée du carrousel **9** (le cas échéant avec un décalage *T*), jusqu'à atteindre la puissance *P*_N nominale lorsque la vitesse *ω*(*t*) atteint la vitesse *ω*_N, ce qui correspond à la pleine cadence.

Tout au long de l'accélération du carrousel **9**, et de l'augmentation de la puissance fournie au four **14** (et donc rayonnée dans la cavité **15**), les préformes **3** reçoivent une quantité constante d'énergie, ce qui permet de produire des récipients **2** de qualité constante y compris en régime transitoire.

Il en résulte une augmentation de la productivité effective de l'installation **1**, sans qu'il soit nécessaire de la modifier substantiellement (par ex. en remplaçant le moteur **10** du carrousel par un moteur plus puissant susceptible d'atteindre plus vite la vitesse nominale pour raccourcir la phase transitoire de démarrage).

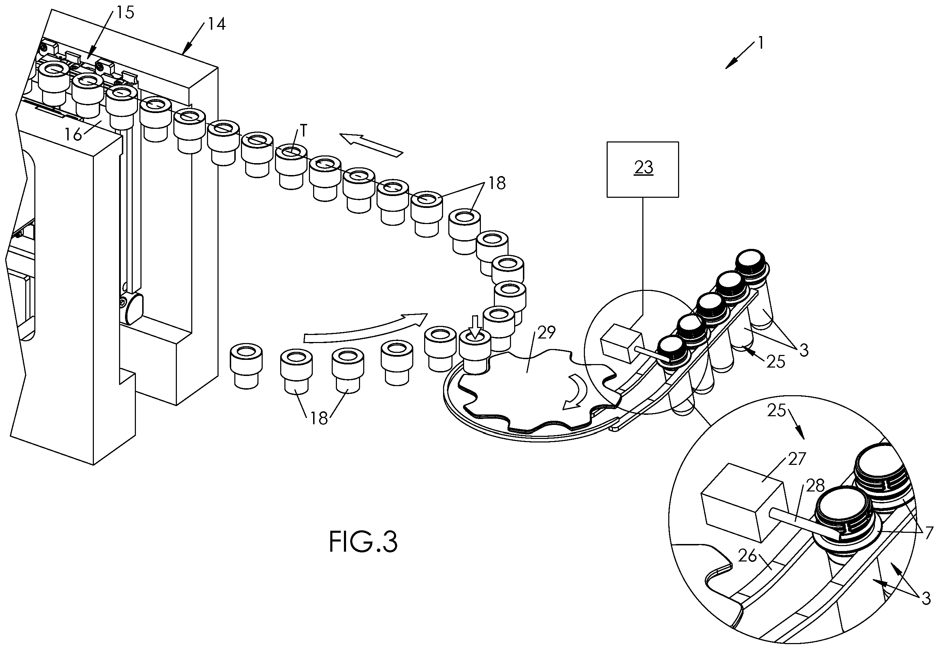

Selon un mode de réalisation illustré sur les **FIG.3**, **FIG.4** et **FIG.5**, l'installation **1** comprend un dispositif **25** d'alimentation du four **14** en préformes **3**.

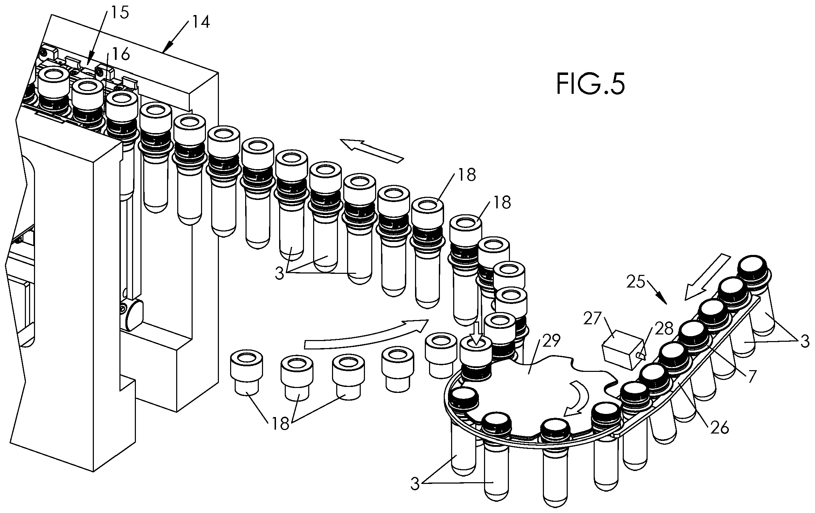

Comme on le voit notamment sur la **FIG.5**, en amont du four **14** les préformes **3** se déplacent par gravité sur un rail **26** de transport auquel elles sont suspendues par leur collerette **7**.

A une extrémité aval du rail **26**, le dispositif **25** d'alimentation comprend un actionneur **27** pourvu d'une tige **28** mobile entre :

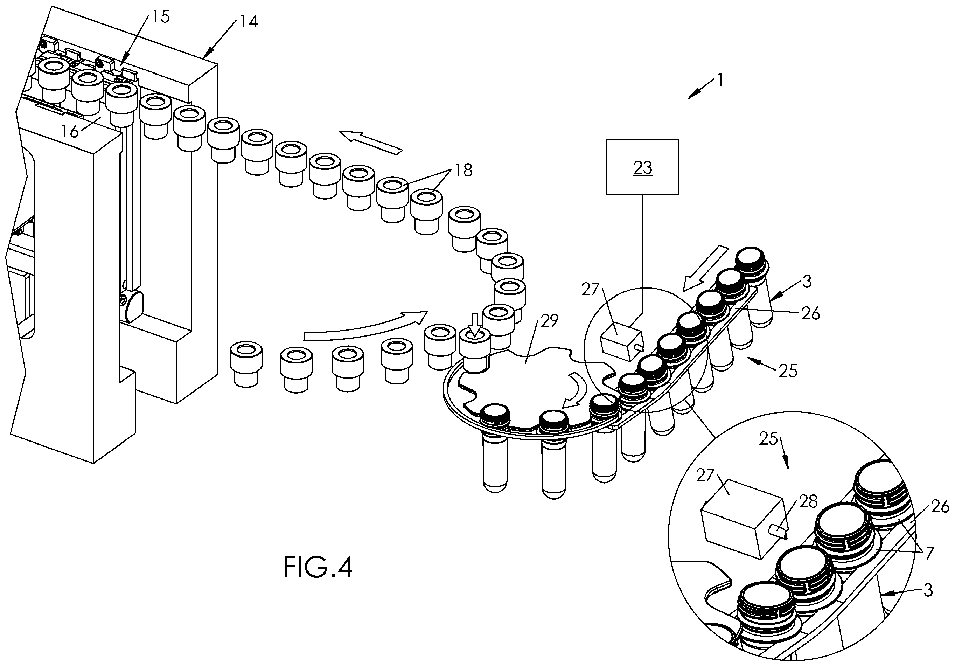

- une position déployée (correspondant à un état fermé du dispositif **25** d'alimentation, **FIG.3**) dans laquelle la tige **28** fait barrière aux préformes **3** pour les empêcher d'avancer, et
- une position escamotée (correspondant à un état ouvert du dispositif **25** d'alimentation, **FIG.4** et **FIG. 5**) dans laquelle la tige **28** est écartée du trajet des préformes **3** pour leur permettre d'avancer librement, de sorte à être pris en charge par une roue **29** dentée de transfert et mise au pas.

L'actionneur **27** est piloté par l'unité **23** de contrôle, auquel il est relié.

Plus précisément, l'unité **23** de contrôle peut être programmée pour commander l'ouverture du dispositif **25** d'alimentation sous conditions, notamment en fonction de la vitesse *ω*(*t*) instantanée de rotation du carrousel **9**.

Ainsi, suivant un mode particulier de rotation, l'unité **23** de contrôle est programmée pour :

- tant que la vitesse *ω*(*t*) réelle de rotation du carrousel **9** est inférieure à une valeur *ω*_1 seuil (atteinte à un instant *t*_1 intermédiaire entre *t*_0 et *t*_2) comprise entre 15% et 50% de la consigne *ω*_N, maintenir fermé (état F sur le chronogramme en bas sur la **FIG.2**) le dispositif **25** d'alimentation ;
- dès que la vitesse *ω*(*t*) réelle de rotation du carrousel **9** atteint la valeur *ω*_1 seuil, commander l'ouverture (état O sur le chronogramme de la **FIG.2**) du dispositif **25** d'alimentation.

De la sorte, il est possible de choisir l'instant auquel la production démarre, certes sans attendre que le carrousel **9** ait atteint sa vitesse nominale, mais également en attendant qu'il ait atteint une vitesse suffisante pour permettre le formage des récipients **2** en minimisant notamment la durée des transferts des préformes **3**, pendant lesquelles la matière a tendance à refroidir.

Dans l'exemple illustré en trait mixte sur la courbe centrale de la **FIG.2**, où le délai $T$ est non nul, ce décalage $T$ correspond à l'écart entre l'instant $t_0$ initial et l'instant $t_1$ intermédiaire :

$$T = t_1 - t_0$$

Ce délai, qui demeure faible (il se compte en secondes), permet de limiter la consommation d'énergie en retardant l'allumage du four **14** jusqu'à ce que le dispositif **25** d'alimentation soit effectivement ouvert.

**Revendications**

1. Installation (**1**) de production de récipients (**2**) à partir d'ébauches (**3**) en matière plastique, qui définit un trajet (T**)** de circulation des ébauches (**3**) et des récipients (**2**), et qui comprend :

   - une unité (**8**) de formage équipée d'un carrousel (**9**) tournant entraîné par un moteur (**10**) et d'une série de postes (**11**) de formage montés sur le carrousel (**9**) et incluant chacun un moule (**12**) à l'empreinte d'un récipient et un dispositif d'injection d'un fluide sous pression dans les ébauches (**3**) ;
   - une unité (**14**) de chauffe des ébauches (**3**), située sur le trajet (**T**) de circulation en amont de l'unité (**8**) de formage et définissant une cavité (**15**) de chauffe, cette unité (**14**) de chauffe étant équipée :

      ◦ d'une série d'émetteurs (**16**) adjacents bordant la cavité (**15**) et comprenant chacun une pluralité de sources de rayonnement monochromatique émettant dans l'infrarouge,
      ◦ d'un système (**17**) d'entraînement des ébauches (**3**), synchronisé au carrousel (**9**) et comprenant une pluralité de supports (**18**) individuels pour les ébauches (**3**) ;
      ◦ d'une alimentation (**19**) électrique fournissant chaque émetteur (**16**) en puissance électrique ;

   - une unité (**23**) de contrôle reliée au moteur (**10**) de l'unité (**8**) de formage et à l'alimentation de l'unité (**14**) de chauffe, cette unité (**23**) de contrôle ayant une mémoire (**24**) dans laquelle sont enregistrées une consigne de vitesse $\omega_N$ nominale de rotation du carrousel (**9**) et une consigne de puissance électrique nominale $P_N$ qui correspondent à une cadence de production nominale ;

   cette installation (**1**) étant **caractérisée en ce que** l'unité (**23**) de contrôle est programmée pour, à partir d'une configuration arrêtée dans laquelle le carrousel (**9**) est immobile :

   - commander la rotation du carrousel (**9**) suivant la consigne de vitesse $\omega_N$ nominale,
   - au cours de l'accélération du carrousel (**9**) :

      ◦ prendre en compte une vitesse $\omega(t)$ instantanée réelle de rotation du carrousel (**9**),
      ◦ régler la puissance électrique de l'alimentation (**19**) à une valeur $P(t)$ instantanée telle que :

   $$P(t) = P_N \cdot \frac{\omega(t-T)}{\omega_N}$$

   où $T$ est un nombre réel positif ou nul.

2. Installation (**1**) selon la revendication 1, **caractérisée** en qu'elle comprend un dispositif (**25**) d'alimentation de l'unité (**14**) de chauffe en ébauches (**3**), propre à adopter un état ouvert dans lequel le passage des ébauches (**3**) vers l'unité (**14**) de chauffe est libre, et un état fermé dans lequel le passage des ébauches (**3**) vers l'unité (**14**) de chauffe est bloqué, l'unité (**23**) de contrôle étant programmée pour :

   - tant que la vitesse réelle de rotation du carrousel (**9**) est inférieure à une valeur seuil comprise entre 15% et 50% de la consigne, maintenir fermé le dispositif (**25**) d'alimentation ;
   - dès que la vitesse de rotation du carrousel (**9**) atteint la valeur seuil, commander l'ouverture du dispositif (**25**) d'alimentation.

3. Procédé de production de récipients (**2**) à partir d'ébauches (**3**) en matière plastique, au sein d'une installation (**1**) de production qui définit un trajet (**T**) de circulation des ébauches (**3**) et des récipients (**2**), et qui comprend :

   - une unité (**8**) de formage équipée d'un carrousel (**9**) tournant entraîné par un moteur (**10**) et d'une série de postes (**11**) de formage montés sur le carrousel (**9**) et incluant chacun un moule (**12**) à l'empreinte d'un récipient et un dispositif d'injection d'un fluide sous pression dans les ébauches (**3**) ;
   - une unité (**14**) de chauffe des ébauches (**3**), située sur le trajet (**T**) de circulation en amont de l'unité (**8**) de formage et définissant une cavité (**15**) de chauffe, cette unité (**14**) de chauffe étant équipée :

      ◦ d'une série d'émetteurs (**16**) adjacents bordant la cavité (**15**) et comprenant chacun une pluralité de sources de rayonnement monochromatique émettant dans l'infrarouge,

◦ d'un système (**17**) d'entraînement des ébauches (**3**), synchronisé au carrousel (**9**) et comprenant une pluralité de supports (**18**) individuels pour les ébauches (**3**) ;
◦ d'une alimentation (**19**) électrique fournissant chaque émetteur (**16**) en puissance électrique ;

- une unité (**23**) de contrôle reliée au moteur (**10**) de l'unité (**8**) de formage et à l'alimentation de l'unité (**14**) de chauffe, cette unité (**23**) de contrôle ayant une mémoire (**24**) dans laquelle sont enregistrées une consigne de vitesse $\omega_N$ nominale de rotation du carrousel (**9**) et une consigne de puissance électrique nominale $P_N$ qui correspondent à une cadence de production nominale ;

ce procédé étant **caractérisé en ce qu'**il comprend les opérations suivantes, à partir d'une configuration arrêtée de l'installation (**1**), dans laquelle le carrousel (**9**) est immobile :

- commander par l'unité (**23**) de contrôle la rotation du carrousel (**9**) suivant la consigne de vitesse $\omega_N$ nominale,
- au cours de l'accélération du carrousel (**9**) :

◦ mesurer une vitesse $\omega(t)$ instantanée réelle de rotation du carrousel (**9**),
◦ sur commande de l'unité (**23**) de contrôle, régler la puissance électrique de l'alimentation (**19**) à une valeur $P(t)$ instantanée telle que :

$$P(t) = P_N \cdot \frac{\omega(t-T)}{\omega_N}$$

où T est un nombre réel positif ou nul.

4. Procédé selon la revendication 3, **caractérisé en ce que**, l'installation (**1**) étant équipée d'un dispositif (**25**) d'alimentation de l'unité (**14**) de chauffe en ébauches (**3**), propre à adopter un état ouvert dans lequel le passage des ébauches (**3**) vers l'unité (**14**) de chauffe est libre, et un état fermé dans lequel le passage des ébauches (**3**) vers l'unité (**14**) de chauffe est bloqué, sont en outre prévues les opérations suivantes :

- tant que la vitesse réelle de rotation du carrousel (**9**) est inférieure à une valeur seuil comprise entre 15% et 50% de la consigne, maintenir fermé le dispositif (**25**) d'alimentation ;
- dès que la vitesse de rotation du carrousel (**9**) atteint la valeur seuil, commander l'ouverture du dispositif (**25**) d'alimentation.

**Patentansprüche**

1. Anlage (1) zur Herstellung von Behältern (2) ausgehend von Vorformlingen (3) aus Kunststoff, die eine Umlaufstrecke (T) der Vorformlinge (3) und der Behälter (2) definiert, und die enthält:

- eine Formeinheit (8), die mit einem drehenden Karussell (9), das von einem Motor (10) angetrieben wird, und einer Reihe von Formstationen (11) ausgestattet ist, die auf das Karussell (9) montiert sind und je eine Form (12) mit der Hohlform eines Behälters und eine Einspritzvorrichtung eines Druckfluids in die Vorformlinge (3) enthalten;
- eine Heizeinheit (14) der Vorformlinge (3), die sich auf der Umlaufstrecke (T) stromaufwärts vor der Formeinheit (8) befindet und einen Heizhohlraum (15) definiert, wobei diese Heizeinheit (14) ausgestattet ist mit:

◦ einer Reihe von benachbarten Emittern (16), die den Hohlraum (15) umranden und je eine Vielzahl von im Infrarotbereich emittierenden monochromatischen Strahlungsquellen enthalten,
◦ einem Antriebssystem (17) der Vorformlinge (3), das mit dem Karussell (9) synchronisiert ist und eine Vielzahl von Einzelträgern (18) für die Vorformlinge (3) enthält;
◦ einer elektrischen Energieversorgung (19), die jeden Emitter (16) mit elektrischer Leistung versorgt;

- eine Kontrolleinheit (23), die mit dem Motor (10) der Formeinheit (8) und mit der Versorgung der Heizeinheit (14) verbunden ist, wobei diese Kontrolleinheit (23) einen Speicher (24) hat, in dem ein Sollwert der Nenndrehzahl $\omega_N$ des Karussells (9) und ein Sollwert der elektrischen Nennleistung $P_N$ gespeichert sind, die einer Nenn-Produktionsrate entsprechen;

wobei diese Anlage (1) **dadurch gekennzeichnet ist, dass** die Kontrolleinheit (23) programmiert ist, um ausgehend von einer festgelegten Konfiguration, in der das Karussell (9) unbeweglich ist:

- die Drehung des Karussells (9) gemäß dem Sollwert der Nenngeschwindigkeit $\omega_N$ zu steuern,
- während der Beschleunigung des Karussells (9):

    ∘ eine reale augenblickliche Drehzahl ω(t) des Karussells (9) zu berücksichtigen,
    ∘ die elektrische Leistung der Versorgung (19) auf einen Augenblickswert P(t) zu regeln, derart, dass gilt

$$P(t) = P_N \cdot \frac{\omega(t - T)}{\omega_N}$$

wobei T eine positive reale Zahl oder Null ist.

2. Anlage (1) nach Anspruch 1, **dadurch gekennzeichnet, dass** sie eine Vorrichtung (25) zur Versorgung der Heizeinheit (14) mit Vorformlingen (3) enthält, die einen offenen Zustand, in dem der Übergang der Vorformlinge (3) zur Heizeinheit (14) frei ist, und einen geschlossenen Zustand annehmen kann, in dem der Übergang der Vorformlinge (3) zur Heizeinheit (14) blockiert ist, wobei die Kontrolleinheit (23) programmiert ist, um:

    - so lange die reale Drehzahl des Karussells (9) unter einem Schwellwert zwischen 15% und 50% des Sollwerts liegt, die Versorgungsvorrichtung (25) geschlossen zu halten;
    - sobald die Drehzahl des Karussells (9) den Schwellwert erreicht, die Öffnung der Versorgungsvorrichtung (25) zu steuern.

3. Verfahren zur Herstellung von Behältern (2) ausgehend von Vorformlingen (3) aus Kunststoff in einer Herstellungsanlage (1), die eine Umlaufstrecke (T) der Vorformlinge (3) und der Behälter (2) definiert, und die enthält:

    - eine Formeinheit (8), die mit einem drehenden Karussell (9), das von einem Motor (10) angetrieben wird, und einer Reihe von Formstationen (11) ausgestattet ist, die auf das Karussell (9) montiert sind und je eine Form (12) mit der Hohlform eines Behälters und eine Einspritzvorrichtung eines Druckfluids in die Vorformlinge (3) enthalten;
    - eine Heizeinheit (14) der Vorformlinge (3), die sich auf der Umlaufstrecke (T) stromaufwärts vor der Formeinheit (8) befindet und einen Heizhohlraum (15) definiert, wobei diese Heizeinheit (14) ausgestattet ist mit:

        ∘ einer Reihe von benachbarten Emittern (16), die den Hohlraum (15) umranden und je eine Vielzahl von im Infrarotbereich emittierenden monochromatischen Strahlungsquellen enthalten,
        ∘ einem Antriebssystem (17) der Vorformlinge (3), das mit dem Karussell (9) synchronisiert ist und eine Vielzahl von Einzelträgern (18) für die Vorformlinge (3) enthält;
    ∘ einer elektrischen Energieversorgung (19), die jeden Emitter (16) mit elektrischer Leistung versorgt;

    - eine Kontrolleinheit (23), die mit dem Motor (10) der Formeinheit (8) und mit der Versorgung der Heizeinheit (14) verbunden ist, wobei diese Kontrolleinheit (23) einen Speicher (24) hat, in dem ein Sollwert der Nenndrehzahl ω_N des Karussells (9) und ein Sollwert der elektrischen Nennleistung P_N gespeichert sind, die einer Nenn-Produktionsrate entsprechen;

wobei dieses Verfahren **dadurch gekennzeichnet ist, dass** es die folgenden Vorgänge ausgehend von einer festgelegten Konfiguration der Anlage (1) enthält, in der das Karussell (9) unbeweglich ist:

    - durch die Kontrolleinheit (23) die Drehung des Karussells (9) gemäß dem Sollwert der Nenngeschwindigkeit ω_N zu steuern,
    - während der Beschleunigung des Karussells (9):

        ∘ eine reale augenblickliche Drehzahl ω(t) des Karussells (9) zu messen,
        ∘ auf Befehl der Kontrolleinheit (23) die elektrische Leistung der Versorgung (19) auf einen Augenblickswert P(t) zu regeln, derart, dass gilt

$$P(t) = P_N \cdot \frac{\omega(t - T)}{\omega_N}$$

wobei T eine positive reale Zahl oder Null ist.

4. Verfahren nach Anspruch 3, **dadurch gekennzeichnet, dass**, da die Anlage (1) mit einer Vorrichtung (25) zur Versorgung der Heizeinheit (14) mit Vorformlingen (3) versehen ist, die einen offenen Zustand, in dem der Übergang der Vorformlinge (3) zur Heizeinheit (14) frei ist, und einen geschlossenen Zustand annehmen kann, in dem der Übergang der Vorformlinge (3) zur Heizeinheit (14) blockiert ist, außerdem die folgenden Vorgänge vorgesehen sind:

    - so lange die reale Drehzahl des Karussells (9) unter einem Schwellwert zwischen 15% und 50% des Sollwerts liegt, die Versorgungsvorrichtung (25) geschlossen zu halten;
    - sobald die Drehzahl des Karussells (9) den Schwellwert erreicht, die Öffnung der Versorgungsvorrichtung (25) zu steuern.

## Claims

1. Installation (1) for producing containers (2) from parisons (3) made of plastic, which defines a path (T) for circulation of the parisons (3) and of the containers (2), and which comprises:

   - a forming unit (8) equipped with a rotating carousel (9) driven by a motor (10) and a series of forming stations (11) mounted on the carousel (9) and each including a mould (12) having the imprint of a container and a device for injecting a pressurized fluid into the parisons (3);
   - a unit (14) for heating the parisons (3), located on the circulation path (T) upstream of the forming unit (8) and defining a heating cavity (15), this heating unit (14) being equipped with:

      ○ a set of adjacent emitters (16) adjoining the cavity (15) and each comprising a plurality of monochromatic radiation sources emitting in the infrared,
      ○ a drive system (17) for the parisons (3), this being synchronized with the carousel (9) and comprising a plurality of individual supports (18) for the parisons (3);
      ○ a supply (19) of electricity supplying electric power to each emitter (16);

   - a control unit (23) connected to the motor (10) of the forming unit (8) and to the supply for the heating unit (14), this control unit (23) having a memory (24) in which are recorded a nominal setpoint rotational speed $\omega_N$ of the carousel (9) and a nominal setpoint electric power $P_N$, which correspond to a nominal production rate;

   this installation (1) being **characterized in that** the control unit (23) is programmed to, starting from a stopped configuration in which the carousel (9) is immobile:

   - order the carousel (9) to rotate as per the nominal setpoint speed $\omega_N$,
   - as the carousel (9) accelerates:

      ○ take into account a real instantaneous rotational speed $\omega(t)$ of the carousel (9),
      ○ regulate the electrical power supply (19) to an instantaneous value $P(t)$ such that:

   $$P(t) = P_N \cdot \frac{\omega(t-T)}{\omega_N}$$

   where T is a positive real number or zero.

2. Installation (1) according to Claim 1, **characterized**

   **in that** it comprises a device (25) for supplying parisons (3) to the heating unit (14), this supply device being able to adopt an open state in which the parisons (3) are free to pass to the heating unit (14), and a closed state in which the parisons (3) are prevented from passing to the heating unit (14), the control unit (23) being programmed to:

   - keep the supply device (25) closed as long as the real rotational speed of the carousel (9) is below a threshold value between 15% and 50% of the setpoint;
   - order the supply device (25) to open once the rotational speed of the carousel (9) reaches the threshold value.

3. Method for producing containers (2) from parisons (3) made of plastic, within a production installation (1) which defines a path (T) for circulation of the parisons (3) and of the containers (2), and which comprises:

   - a forming unit (8) equipped with a rotating carousel (9) driven by a motor (10) and a series of forming stations (11) mounted on the carousel (9) and each including a mould (12) having the imprint of a container and a device for injecting a pressurized fluid into the parisons (3);
   - a unit (14) for heating the parisons (3), located on the circulation path (T) upstream of the forming unit (8) and defining a heating cavity (15), this heating unit (14) being equipped with:

      ○ a set of adjacent emitters (16) adjoining the cavity (15) and each comprising a plurality of monochromatic radiation sources emitting in the infrared,
      ○ a drive system (17) for the parisons (3), this being synchronized with the carousel (9) and comprising a plurality of individual supports (18) for the parisons (3);
      ○ a supply (19) of electricity supplying electric power to each emitter (16);

   - a control unit (23) connected to the motor (10) of the forming unit (8) and to the supply for the heating unit (14), this control unit (23) having a memory (24) in which are recorded a nominal setpoint rotational speed $\omega_N$ of the carousel (9) and a nominal setpoint electric power $P_N$, which correspond to a nominal production rate;

   this method being **characterized in that** it comprises the following operations, starting from a stopped configuration of the installation (1) in which the carousel (9) is immobile:

   - order, by means of the control unit (23), the carousel (9) to rotate as per the nominal setpoint speed $\omega_N$,
- as the carousel (9) accelerates:

◦ measure a real instantaneous rotational speed $\omega(t)$ of the carousel (9),
◦ under the control of the control unit (23), regulate the electrical power supply (19) to an instantaneous value $P(t)$ such that:

$$P(t) = P_N \cdot \frac{\omega(t - T)}{\omega_N}$$

where $T$ is a positive real number or zero.

4.  Method according to Claim 3, **characterized in that**, the installation (1) being equipped with a device (25) for supplying parisons (3) to the heating unit (14), this supply device being able to adopt an open state in which the parisons (3) are free to pass to the heating unit (14), and a closed state in which the parisons (3) are prevented from passing to the heating unit (14), the following operations are further provided:

- keep the supply device (25) closed as long as the real rotational speed of the carousel (9) is below a threshold value between 15% and 50% of the setpoint;
- order the supply device (25) to open once the rotational speed of the carousel (9) reaches the threshold value.

FIG.1

EP 3 446 852 B1

FIG.2

FIG.3

FIG.4

EP 3 446 852 B1

FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3119582 A

- US 20120080827 A, Krones